(19) Europäisches Patentamt
European Patent Office
Office européen des brevets

(11) **EP 2 103 916 B1**

(12) **FASCICULE DE BREVET EUROPEEN**

(45) Date de publication et mention
de la délivrance du brevet:
**15.06.2016 Bulletin 2016/24**

(51) Int Cl.:
***G01J 3/45*** (2006.01)

(21) Numéro de dépôt: **09155358.6**

(22) Date de dépôt: **17.03.2009**

(54) **Spectromètre à transformation de Fourier.**

Fourier-Transformationsspektrometer.

Fourier transform spectrometer.

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **20.03.2008 FR 0851798**

(43) Date de publication de la demande:
**23.09.2009 Bulletin 2009/39**

(73) Titulaire: **Airbus Defence and Space SAS
78130 Les Mureaux (FR)**

(72) Inventeur: **Pasternak, Frédérick
31590 Gaure (FR)**

(74) Mandataire: **Cabinet Plasseraud
66, rue de la Chaussée d'Antin
75440 Paris Cedex 09 (FR)**

(56) Documents cités:
**US-A- 5 357 337**

**Description**

La présente invention concerne un spectromètre à transformation de Fourier ainsi qu'un procédé d'analyse spectrale pouvant utiliser un tel spectromètre à transformation de Fourier. Un tel spectromètre est divulgué dans le document US5357337.

Il est courant d'obtenir une analyse spectrale d'un rayonnement en effectuant une transformation de Fourier d'un interférogramme produit avec un dispositif interférentiel. Le système optique d'interférence, de mesure et d'analyse qui est ainsi utilisé est appelé spectromètre à transformation de Fourier. Il comprend usuellement :

- le dispositif interférentiel, qui est adapté pour produire une différence variable de longueur de chemin optique entre au moins deux faisceaux intermédiaires de rayonnement formés à partir d'un faisceau initial, et pour regrouper ces deux faisceaux intermédiaires dans un faisceau de rayonnement final ;

- un photodétecteur, qui est disposé pour recevoir le faisceau de rayonnement final, et qui est adapté pour détecter le rayonnement reçu en accumulant une quantité-témoin en fonction d'une intensité de ce rayonnement reçu ; et

- une électronique de commande, qui est agencée pour commander une détection du rayonnement reçu par le photodétecteur à l'intérieur d'un cycle de détection, et pour délivrer un signal de lecture à la fin de ce cycle de détection.

Une détection de rayonnement telle que décrite ci-dessus est dite à accumulation, ou à intégration. Elle fournit une mesure de l'intensité du rayonnement à partir d'une variation de la quantité-témoin. Cette quantité-témoin augmente proportionnellement à l'intensité du rayonnement qui est reçu par le photodétecteur pendant une période de détection dont la durée est fixée. Le signal de lecture correspond alors à la variation de la quantité-témoin qui a été produite par le rayonnement reçu pendant la période de détection. Un cycle de détection comprend donc une initialisation de la quantité-témoin, la période de détection du rayonnement reçu, et la production du signal de lecture à partir de la variation de la quantité-témoin.

Usuellement, la quantité-témoin est une grandeur électrique qui est produite par un photodétecteur, sous l'effet du rayonnement reçu par celui-ci. Selon une structure courante d'une chaîne de détection de rayonnement infrarouge, le photodétecteur est une photodiode. La grandeur électrique associée peut être un courant qui est transféré dans un condensateur pendant la période de détection, ou bien un nombre d'électrons qui sont produits par la photodiode et accumulés pendant une période de détection. Une mesure de cette grandeur électrique est alors fournie par un transistor MOS dont la grille est connectée au condensateur. Le même principe de détection et de mesure est couramment appliqué à une barrette ou à une matrice de photodétecteurs.

La distribution énergétique spectrale du rayonnement du faisceau initial est alors obtenue par la relation mathématique suivante (1) :

$$L(\sigma) = T.F.[I(\delta)](\sigma) \qquad (1)$$

où

$\sigma$ est le nombre d'onde du rayonnement, égal à l'inverse de sa longueur d'onde,
$L(\sigma)$ est la distribution énergétique spectrale du rayonnement, fonction du nombre d'onde $\sigma$,
$\delta$ est la différence de longueur de chemin optique qui est créée par le dispositif interférentiel,
$I(\delta)$ est l'intensité du rayonnement qui est reçu par le photodétecteur pour chaque valeur de la différence de longueur de chemin optique $\delta$, et
T.F. désigne l'opération de transformation de Fourier.

La différence de longueur de chemin optique $\delta$ est variée entre des détections successives de l'intensité I, avec une vitesse de variation qui est en général constante.

Etant donné que le nombre d'onde $\sigma$ ne prend que des valeurs positives, l'opération de transformation de Fourier de la relation (1) est une transformation en cosinus pour une analyse spectrale qui est réalisée de façon usuelle.

Dans ces conditions, une performance radiométrique du spectromètre à transformation de Fourier est donnée par le rapport signal sur bruit $SNR_\sigma$ («signai to noise ratio» en anglais) qui est associé à une caractéristique obtenue pour la distribution énergétique spectrale du rayonnement $L(\sigma)$. De façon connue, ce rapport est limité par une valeur maximale selon la relation suivante (2) :

$$\mathrm{SNR}_\sigma < \frac{10^{\mathrm{Dyn}/20}}{\sqrt{\Re}} \qquad (2)$$

où

Dyn = 20.log($S_{max}/N_{an}$) est la dynamique du circuit de lecture du photodétecteur, exprimée en dB (décibel),
$S_{max}$ étant la valeur maximale pour la mesure analogique de l'intensité I du rayonnement,
$N_{an}$ étant le niveau de bruit analogique du circuit de détection, excluant une contribution au bruit qui est intrinsèque à l'intensité I du rayonnement et au photodétecteur, et
$\Re$ est la résolution spectrale qui est adoptée pour le nombre d'onde $\sigma$ lors du calcul de la transformation de Fourier de la relation (1), c'est-à-dire $\Re$ où $\delta\sigma$ est le pas adopté pour le nombre d'onde $\sigma$.

Couramment, la dynamique du circuit de lecture Dyn est de l'ordre de 80 dB, correspondant à un facteur 10.000 entre la valeur analogique maximale $S_{max}$ et le bruit $N_{an}$. Une telle valeur de Dyn qui est élevée est nécessaire pour mesurer l'intensité I du rayonnement pour les très faibles valeurs de la différence de longueur de chemin optique $\delta$, voire pour obtenir une valeur de mesure de l'intensité I pour $\delta$ = 0.

Ainsi, plus une résolution spectrale $\Re$ est recherchée qui est fine, plus la dynamique de lecture Dyn apparaît limitative pour obtenir une valeur faible du rapport signal sur bruit $SNR_\sigma$, associé à la caractéristique obtenue pour la distribution énergétique spectrale L($\sigma$).

Un but de la présente invention consiste donc à fournir un spectromètre à transformation de Fourier, pour lequel la dynamique du circuit de lecture du détecteur de rayonnement provoque une limitation de la résolution spectrale qui est moins contraignante que précédemment.

Un autre but de la présente invention consiste à fournir un procédé d'analyse spectrale qui présente une valeur réduite du rapport signal sur bruit associé à une caractéristique obtenue pour la distribution énergétique spectrale, à résolution spectrale constante.

Pour cela, l'invention propose un spectromètre à transformation de Fourier selon la revendication 1.

Ainsi, la lecture qui est effectuée selon l'invention est différentielle. En effet, le signal de lecture correspond directement à la différence entre des accumulations de la quantité-témoin qui peuvent correspondre chacune à une mesure d'intensité de rayonnement qui serait réalisée selon la méthode usuelle pendant la période de détection correspondante. Autrement dit, lorsque la différence de longueur de chemin optique varie peu entre les deux périodes de détection qui sont introduites par l'invention à l'intérieur du cycle de détection, sans que cette différence de longueur de chemin optique reste toutefois constante entre ces deux périodes, le signal de lecture correspond à la première dérivée («first derivative» en anglais) de l'intensité du rayonnement du faisceau final. Pour cela, le signal de lecture est considéré comme une fonction de la différence de longueur de chemin optique, cette dernière pouvant elle-même être évaluée comme une valeur moyenne qui est établie sur la durée du cycle de détection.

La quantité-témoin est continue entre les deux périodes de détection d'un même cycle de détection. Autrement dit, aucune réinitialisation de la quantité-témoin, ni aucune action susceptible de l'affecter, n'est effectuée entre les deux périodes de détection du cycle. La quantité-témoin n'est pas lue à la fin de la première période de détection, et les deux accumulations qui se produisent successivement pendant les deux périodes de détection sont superposées en étant affectées de signes algébriques qui sont opposés. A chaque cycle de détection, la quantité-témoin n'est lue qu'une seule fois, après la fin de la deuxième période de détection. Le signal de lecture apparaît donc directement comme la différence entre les accumulations de la quantité-témoin qui sont produites respectivement pendant les deux périodes de détection d'un même cycle.

Lorsque plusieurs cycles de détection sont réalisés successivement pour des valeurs incrémentées de la différence de longueur de chemin optique, une transformation de Fourier qui est effectuée sur les valeurs successives du signal de lecture produit une caractéristique de la distribution énergétique spectrale du rayonnement du faisceau initial, multipliée par le nombre d'onde. Des valeurs de la distribution énergétique spectrale du rayonnement initial peuvent alors être calculées en divisant les valeurs qui résultent de la transformation de Fourier par les valeurs correspondantes du nombre d'onde.

A cause de la restriction du nombre d'onde $\sigma$ à des valeurs positives, l'opération de transformation de Fourier qui est utilisée dans l'invention est une transformation en sinus, pour correspondre au mode d'analyse spectral usuel qui a été rappelé plus haut.

Grâce au principe de la lecture différentielle, l'amplitude du signal de lecture est réduite, et la dynamique du circuit de lecture d'un spectromètre à transformation de Fourier selon l'invention peut être mieux utilisée. Notamment, les inventeurs ont constaté que le rapport signal sur bruit qui affecte la caractéristique de la distribution énergétique spectrale peut être augmenté d'un facteur supérieur ou égal à deux, voire quatre, pour des conditions d'acquisition du signal de lecture qui sont égales par ailleurs.

Selon un mode de réalisation particulier de l'invention, le spectromètre peut comprendre en outre un condensateur ayant deux bornes électriques qui sont reliées respectivement à deux armatures («plates» en anglais) de ce condensateur. La quantité-témoin est alors une charge électrique qui est contenue dans le condensateur. Dans ce cas, l'électronique de commande peut en outre être adaptée pour commander un échange des bornes du condensateur par rapport à deux sorties électriques du photodétecteur, entre les deux périodes de détection. L'électronique de commande peut être adaptée en plus pour délivrer le signal de lecture à partir d'une acquisition («capture» en anglais) de la charge électrique contenue dans le condensateur, qui est réalisée après la seconde période de détection de chaque cycle de détection.

Dans ce mode de réalisation particulier, le changement du signe algébrique de l'accumulation de la quantité-témoin de la seconde période de détection par rapport à celle de la première période de détection est obtenu par l'échange des bornes du condensateur par rapport aux sorties du photodétecteur. Cette méthode d'obtention de la différence entre les deux accumulations est simple à mettre en oeuvre. En outre, la charge électrique qui est contenue dans le condensateur n'est pas modifiée lors de l'échange. Ce maintien de la quantité-témoin entre les deux périodes de détection peut être réalisé aisément. Par exemple, au moins une des bornes du condensateur peut être isolée électriquement entre les deux périodes de détection, ou portée à un potentiel électrique qui est adapté pour bloquer une variation de la charge du condensateur.

Selon un perfectionnement de l'invention, l'électronique de commande peut être adaptée en outre pour déterminer les première et seconde périodes de détection chacune sous forme de plusieurs intervalles de temps élémentaires. Les intervalles de temps élémentaires de la première période de détection sont alors intercalés un à un avec les intervalles de temps élémentaires de la seconde période de détection. L'électronique de commande est alors adaptée aussi pour commander un changement du signe algébrique entre les variations de la quantité-témoin qui se produisent pendant deux intervalles de temps élémentaires successifs, sans que la quantité-témoin soit elle-même modifiée entre ces intervalles de temps élémentaires. Autrement dit, la quantité-témoin est continue entre les intervalles de temps élémentaires successifs d'un même cycle de détection.

Ce perfectionnement correspond à un sur-échantillonnage des variations de la quantité-témoin pendant chaque cycle de détection, sans que chaque variation soit lue individuellement à la fin de l'intervalle de temps élémentaire correspondant. Autrement dit, les variations de la quantité-témoin qui se produisent pendant tous les intervalles de temps élémentaires sont superposées en alternant leurs signes algébriques, et seule la variation totale de la quantité-témoin qui en résulte est lue à la fin du cycle de détection. La dynamique du circuit de lecture du détecteur peut alors être utilisée d'une façon qui est encore plus efficace.

L'invention propose aussi un procédé d'analyse spectrale selon la revendication 4.

Un tel procédé peut être mis en oeuvre en utilisant un spectromètre à transformation de Fourier tel que décrit plus haut.

D'autres particularités et avantages de la présente invention apparaîtront dans la description ci-après d'exemples de réalisation non limitatifs, en référence aux dessins annexés, dans lesquels :

- la figure 1 est un schéma de principe d'un spectromètre à transformation de Fourier selon la présente invention ; et

- les figures 2a et 2b sont deux diagrammes chronologiques de cycles de détection selon la présente invention.

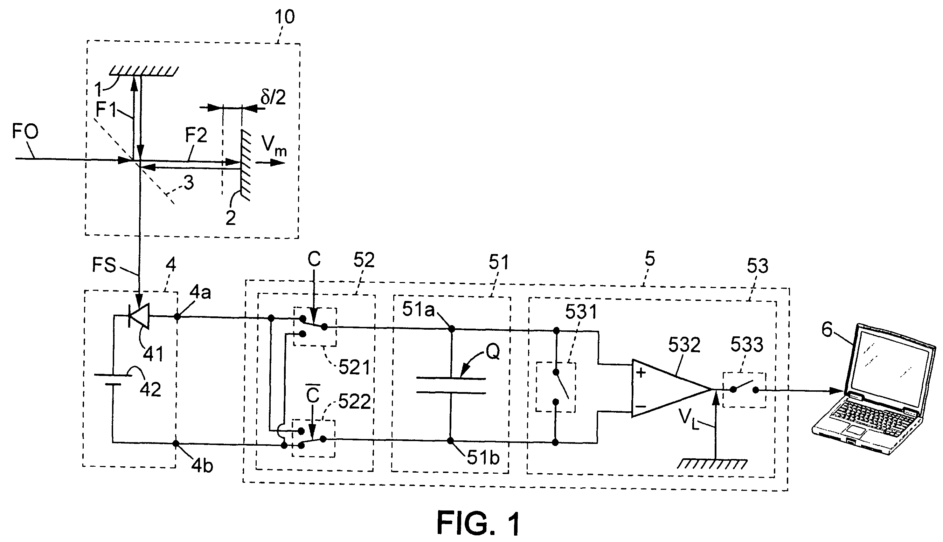

Conformément à la figure 1, un spectromètre à transformation de Fourier comprend un dispositif interférentiel 10, un photodétecteur 4 et une électronique de commande 5. Elle peut comprendre en outre une unité informatique d'enregistrement et/ou de calcul 6.

Le dispositif interférentiel 1 peut être du type interféromètre de Michelson, par exemple. Un tel dispositif et son fonctionnement sont supposés connus et ne sont pas repris en détail ici. Il reçoit en entrée un faisceau de rayonnement à analyser, noté F0 et appelé faisceau de rayonnement initial. Ce faisceau est divisé en deux faisceaux intermédiaires F1 et F2 par une lame semi-transparente 3. Les faisceaux intermédiaires F1 et F2 sont réfléchis respectivement par les miroirs 1 et 2, et réunis de nouveau par la lame 3 pour former le faisceau de sortie FS. Le faisceau de sortie FS est aussi appelé faisceau final. L'intensité du faisceau FS résulte d'une interférence entre les faisceaux intermédiaires F1 et F2, et dépend de la différence entre les longueurs des chemins optiques qui sont suivis respectivement par ceux-ci. De façon simplifiée, la longueur du chemin optique de chaque faisceau intermédiaire est égale au double de la distance entre le miroir 1 ou 2 correspondant et la lame 3. La différence entre les longueurs des deux chemins optiques, notée $\delta$ dans ce texte, est alors égale au double du décalage qui apparaît entre les deux miroirs 1 et 2, lorsque les deux chemins optiques des faisceaux F1 et F2 sont superposés de façon fictive. Usuellement, la différence de longueur $\delta$ est variée en déplaçant l'un des miroirs au moyen d'un moteur (non représenté), alors que l'autre miroir est fixe. Sur la figure, $V_m$ désigne ainsi la vitesse de déplacement du miroir 2.

Le photodétecteur 4 peut être d'un type quelconque. A titre d'illustration, il peut comprendre une photodiode 41 qui est polarisée en sens inverse par une source de tension électrique 42. Lorsque le faisceau de sortie FS éclaire le photodétecteur 4, un courant électrique i circule entre deux bornes de sortie 4a et 4b du photodétecteur, dont l'intensité croît en fonction de celle du faisceau FS.

Les références 51, 52 et 53 désignent respectivement un condensateur, un commutateur-inverseur, et un système de lecture. Ils peuvent appartenir ensemble à l'électronique de commande 5, dont la fonction est de contrôler la mesure de l'intensité du faisceau FS. Alternativement, le condensateur 51 et le commutateur-inverseur 52 peuvent être situés à proximité du photodétecteur 4, voire au sein de ce dernier, afin de permettre d'utiliser des cycles de détection qui sont très courts.

Le condensateur 51 possède deux armatures qui sont agencées pour contenir une charge électrique Q, et deux bornes électriques 51a et 51b qui sont reliées respectivement à ces armatures. Dans le mode particulier de réalisation de l'invention qui est décrit ici, la charge électrique Q constitue la quantité-témoin qui a été introduite plus haut.

Le commutateur-inverseur 52 relie les deux sorties 4a et 4b du détecteur 4 aux deux bornes 51 a et 51 b du condensateur 51. Il peut être réalisé de plusieurs façons qui sont connues de l'Homme du métier pour obtenir des commutations rapides. Notamment, il peut être réalisé à partir d'un ensemble de transistors MOS qui ont une fonction équivalente à celle des deux interrupteurs 521 et 522 représentés sur la figure 1. Ces deux interrupteurs sont commandés en opposition par le signal de commande C, de sorte que le commutateur-inverseur 52 possède deux états qui sont contrôlés par le signal C. Le signal C est fourni par ailleurs par l'électronique de commande 5. Dans le premier état, le commutateur 52 connecte électriquement la sortie 4a du photodétecteur 4 à la borne 51 a du condensateur 51, et simultanément la sortie 4b à la borne 51 b. Dans le second état, il connecte la sortie 4a à la borne 51b, et la sortie 4b à la borne 51 a. Autrement dit, le commutateur-inverseur 52 réalise un échange des deux bornes du condensateur 51 par rapport aux deux sorties du photodétecteur 4. Ainsi, le courant de détection i est envoyé à l'une ou l'autre des deux armatures du condensateur 51, de façon à accroître ou diminuer la charge électrique de chacune des deux armatures. De cette façon, deux accumulations de charge électrique qui sont produites par le courant i dans le condensateur 51 se soustraient l'une à l'autre lorsqu'elles sont séparées par une commutation du commutateur-inverseur 52.

Le commutateur-inverseur 52 est ajouté par la présente invention dans la chaîne de détection du rayonnement du faisceau FS, par rapport à un spectromètre à transformation de Fourier tel que connu de l'art antérieur.

Le système de lecture 53 peut avoir une structure qui était connue avant la présente invention. Par exemple, il peut comprendre un système de réinitialisation de la détection 531, un amplificateur de tension électrique 532 et un système d'échantillonnage 533. Le système de lecture 53 délivre ainsi, à chaque fin d'un cycle de détection, un signal de lecture $V_L$ qui correspond à la charge électrique Q qui est contenue dans le condensateur 51 à cet instant.

Pour réaliser une analyse spectrale du faisceau de rayonnement initial F0, on déplace le miroir 2 progressivement, de façon à incrémenter la différence de longueur de chemin optique $\delta$. Pendant que le miroir 2 est déplacé, on réalise une série de cycles de détection successifs, par exemple cent cycles, lors de chacun desquels le rayonnement du faisceau de sortie FS est détecté. Le signal de lecture $V_L$ qui est obtenu à chaque cycle de détection peut être affecté à une valeur représentative de $\delta$, par exemple à une valeur moyenne de $\delta$, qui est établie pour ce cycle. Les valeurs du signal $V_L$ qui sont obtenues à l'issue de cycles de détection successifs sont transmises à l'unité informatique d'enregistrement et/ou de calcul 6.

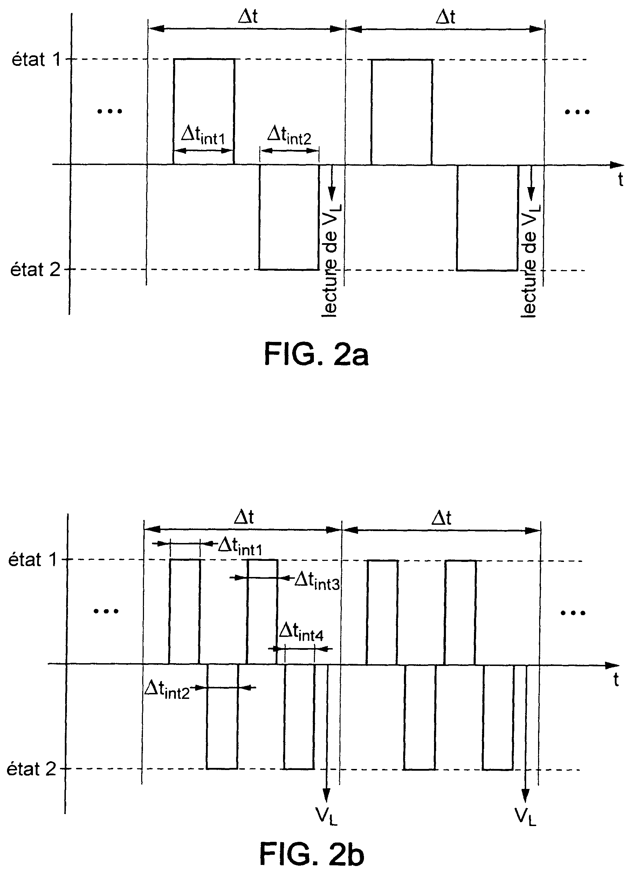

La figure 2a est un diagramme chronologique de principe de deux cycles de détection successifs. La durée de chaque cycle de détection est notée $\Delta t$. «Etat 1» et «état 2» désignent respectivement les deux états de connexion du commutateur-inverseur 52. A l'intérieur de chaque cycle de détection, le commutateur-inverseur 52 se trouve dans le premier état de connexion (état 1) pendant une première période de détection, dont la durée est notée $\Delta t_{int1}$, puis dans le second état de connexion (état 2) pendant une seconde période de détection, dont la durée est notée $\Delta t_{int2}$. Dans le jargon de l'Homme du métier, les deux périodes de détection qui correspondent à $\Delta t_{int1}$ et $\Delta t_{int2}$ sont appelées périodes d'accumulation ou périodes d'intégration. Elles ont des durées égales : $\Delta t_{int1} = \Delta t_{int2}$. Le signal de lecture $V_L$ est obtenu à partir d'une acquisition de la charge électrique Q du condensateur 51, qui est réalisée après la seconde période de détection ($\Delta t_{int2}$). D'après ce qui précède, lorsque la durée $\Delta t$ de chaque cycle de détection est courte par rapport à une durée caractéristique de variation de la différence de longueur de chemin optique $\delta$, le signal de lecture $V_L$ est proportionnel à la dérivée première de l'intensité du faisceau FS par rapport à cette différence, $\delta$, selon la relation suivante (3) :

$$V_L(\delta) = K \cdot \frac{dI(\delta)}{d\delta} \qquad (3)$$

où K est une constante de proportionnalité.

Il est entendu que la relation (3) n'est exacte que lorsque la durée de chaque cycle de détection tend vers zéro. Dans ce cas, la différence qui est introduite selon l'invention entre les variations de charge électrique qui sont produites pendant les deux périodes de détection d'un même cycle peut être assimilée à une opération de dérivation. Lorsque la durée de chaque cycle de détection n'est pas nulle, il est entendu que la relation (3) n'est qu'une relation approchée, qui est d'autant plus exacte que les valeurs du nombre d'onde σ sont faibles

On peut alors calculer des valeurs V(σ) d'une fonction du nombre d'onde σ en effectuant une transformation de Fourier, par rapport à la différence de longueur de chemin optique δ, des signaux de lecture qui sont obtenus pour les cycles de lecture successifs. Les valeurs V(σ) résultent alors de la relation suivante (4) :

$$V(\sigma) = \text{T.F.}[V_L(\delta)](\sigma) = K \cdot \sigma \cdot L(\sigma) \qquad (4)$$

où T.F. désigne encore l'opération de transformation de Fourier, et L(σ) la distribution énergétique spectrale du rayonnement du faisceau initial F0 Il est entendu que l'opération de transformation de Fourier qui est utilisée dans la présente invention est appliquée à des valeurs discrètes de δ et σ, et ne concerne que des valeurs positives de σ. L'Homme du métier connaît les adaptations de l'opération de transformation de Fourier qui doivent être utilisées en conséquence. En outre, comme indiqué plus haut, une transformation de Fourier en sinus est utilisée dans la relation (4). Cette transformation de Fourier peut être calculée par l'unité informatique 6, en adoptant une valeur fixée pour la résolution spectrale $\mathfrak{R}$.

On divise alors les valeurs de la fonction V(σ) qui sont ainsi calculées par les valeurs correspondantes du nombre d'onde σ. Les résultats de ces quotients sont des estimations de la distribution énergétique spectrale L(o) du rayonnement du faisceau initial F0, et constituent ensemble une caractéristique de cette distribution.

Grâce à l'invention, le bruit de lecture est réduit, la dynamique de signal étant réduite par différentiation, de sorte que le rapport signal sur bruit $SNR_\sigma$ qui est associé à la caractéristique obtenue pour L(σ) est augmenté.

Il résulte alors du niveau du signal de lecture $V_L$, du nombre de cycles de détection qui sont réalisés, et du rapport de la bande utile à la bande spectrale libre du dispositif interférentiel 10. Ce rapport $SNR_\sigma$ de bruit photonique peut être au moins deux fois plus petit que la valeur du terme de droite de la relation (2).

Eventuellement, le rapport signal sur bruit $SNR_\sigma$ peut encore être réduit, d'une façon supplémentaire, en ajustant la durée commune des deux périodes de détection $\Delta t_{int1}$, $\Delta t_{int2}$, ainsi que la position de chaque période de détection à l'intérieur d'un cycle de détection. Un tel ajustement résulte d'un compromis entre une durée totale de détection $\Delta t_{int1}+\Delta t_{int2}$ qui est plus longue d'une part, et d'autre part un écart qui est supérieur entre les deux accumulations qui sont réalisées respectivement pendant les deux périodes de détection.

Un avantage supplémentaire de l'invention résulte du fait que le condensateur 51 peut avoir une valeur de capacité qui est réduite d'un facteur au moins égal à deux environ, par rapport à un spectromètre à transformation de Fourier selon l'art antérieur, pour caractériser un même rayonnement F0 avec des cycles de détection qui ont des durées Δt identiques. Cette réduction de la capacité du condensateur 51 est rendue possible par le fait que chaque période de détection a, en utilisant l'invention, une durée qui est au maximum égale à la moitié de la durée Δt du cycle de détection.

La figure 3b illustre une structure alternative d'un cycle de détection, qui peut être utilisée à la place de celle de la figure 2a. Selon cette nouvelle structure, les première et seconde périodes de détection comprennent chacune plusieurs intervalles de temps élémentaires, ceux de la première période de détection étant intercalés un à un avec ceux de la seconde période de détection. Dans tous les cas, les deux périodes de détection correspondent à des valeurs moyennes respectives de la différence de longueur de chemin optique δ, qui sont différentes. Pour le mode de réalisation avec le condensateur 51, les bornes 51 a et 51 b de celui-ci sont échangées par rapport aux sorties 4a et 4b du photodétecteur 4 à chaque changement d'intervalle de temps élémentaire, alors que la charge électrique Q qui est contenue dans le condensateur 51 n'est pas modifiée pendant chaque échange. Ainsi, deux intervalles élémentaires dont les durées respectives sont notées $\Delta t_{int1}$ et $\Delta t_{int3}$ forment ensemble la première période de détection, pendant laquelle le connecteur-inverseur 52 est dans le premier état de connexion (état 1). De même, les intervalles élémentaires dont les durées respectives sont notées $\Delta t_{int2}$ et $\Delta t_{int4}$ forment ensemble la seconde période de détection, pendant laquelle le connecteur-inverseur 52 est dans le second état de connexion (état 2). La somme des durées $\Delta t_{int1}$ et $\Delta t_{int3}$ est égale à celle des durées $\Delta t_{int2}$ et $\Delta t_{int4}$: $\Delta t_{int1}+\Delta t_{int3} = \Delta t_{int2}+\Delta t_{int4}$. Le signal de lecture $V_L$ est encore acquis à la fin de chaque cycle de détection, lorsque le dernier intervalle de temps élémentaire de la seconde période de détection, de durée $\Delta t_{int4}$, est révolu. Une telle structure de chaque cycle de détection peut permettre de réduire la capacité du condensateur 51 d'un facteur deux supplémentaire.

L'Homme du métier comprendra que ce principe de sur-échantillonnage à l'intérieur de chaque cycle de détection peut être appliqué à un nombre quelconque d'intervalles de temps élémentaires pour chaque période de détection. Pour cela, les deux périodes de détection ont des durées totales respectives qui sont égales et les intervalles de temps élémentaires de chaque période de détection sont intercalés un à un avec ceux de l'autre période de détection, en nombre identique.

Enfin, il est entendu que la présente invention peut être mise en oeuvre en introduisant diverses modifications par rapport à la description qui en a été donnée en détail ci-dessus, tout en conservant certains au moins des avantages qui ont été cités. En particulier, l'Homme du métier saura adapter les paramètres de chaque acquisition d'interférogramme en fonction de caractéristiques du rayonnement à analyser qui seraient connues à l'avance, telles qu'une largeur supposée de sa distribution énergétique spectrale.

**Revendications**

1. Spectromètre à transformation de Fourier, comprenant :

    - un dispositif interférentiel (10) adapté pour produire une différence variable de longueur de chemin optique entre au moins deux faisceaux intermédiaires de rayonnement (F1, F2) formés à partir d'un faisceau initial (F0), et pour regrouper lesdits deux faisceaux intermédiaires dans un faisceau de rayonnement final (FS) ;
    - un photodétecteur (4), disposé pour recevoir le faisceau de rayonnement final (FS), et adapté pour détecter le rayonnement reçu en accumulant une quantité-témoin en fonction d'une intensité dudit rayonnement reçu ; et
    - une électronique de commande (5), agencée pour commander une détection du rayonnement reçu par le photodétecteur (4) à l'intérieur d'un cycle de détection, et pour délivrer un signal de lecture ($V_L$) à la fin dudit cycle de détection ;

le spectromètre étant **caractérisé en ce que** l'électronique de commande (5) est adaptée en outre pour déterminer, à l'intérieur du cycle de détection, deux périodes de détection séparées ayant des durées respectives égales, correspondant à des valeurs moyennes respectives de la différence de longueur de chemin optique, et pendant chacune desquelles le rayonnement reçu par le photodétecteur est détecté,
et **en ce que** ledit spectromètre est en outre adapté de sorte que le signal de lecture ($V_L$) soit égal à une différence entre une première variation de la quantité-témoin se produisant pendant une première des périodes de détection, et une seconde variation de ladite quantité-témoin se produisant pendant une seconde desdites périodes de détection,
et adapté pour réaliser successivement plusieurs cycles de détection pour des valeurs incrémentées de la différence de longueur de chemin optique, de sorte qu'une transformation de Fourier effectuée sur les valeurs successives du signal de lecture ($V_L$) produit une caractéristique de la distribution énergétique spectrale du rayonnement du faisceau initial (F0), multipliée par un nombre d'onde du rayonnement.

2. Spectromètre selon la revendication 1, comprenant en outre un condensateur (51) ayant deux bornes électriques (51a, 51b) reliées respectivement à deux armatures dudit condensateur, la quantité-témoin étant une charge électrique (Q) contenue dans le condensateur,
l'électronique de commande (5) étant adaptée en outre pour commander un échange des bornes du condensateur (51a, 51b) par rapport à deux sorties électriques (4a, 4b) du photodétecteur (4), entre les deux périodes de détection, la charge électrique (Q) contenue dans le condensateur n'étant pas elle-même modifiée pendant l'échange, et l'électronique de commande étant adaptée en outre pour délivrer le signal de lecture ($V_L$) à partir d'une acquisition de la charge électrique (Q) contenue dans le condensateur réalisée après ladite seconde période de détection.

3. Spectromètre à transformation de Fourier selon la revendication 1 ou 2, dans lequel l'électronique de commande (5) est adaptée en outre pour déterminer les première et seconde périodes de détection chacune sous forme de plusieurs intervalles de temps élémentaires, les intervalles de temps élémentaires de la première période de détection étant intercalés un à un avec les intervalles de temps élémentaires de la seconde période de détection, et l'électronique de commande étant adaptée en outre pour commander un changement de signe algébrique entre les variations de la quantité-témoin se produisant pendant deux intervalles de temps élémentaires successifs, ladite quantité-témoin n'étant pas elle-même modifiée entre lesdits deux intervalles de temps élémentaires successifs.

4. Procédé d'analyse spectrale utilisant un spectromètre à transformation de Fourier (10), lors duquel un signal d'interférence est généré à partir d'un rayonnement initial (F0) en introduisant une différence de longueur de chemin optique entre au moins deux faisceaux intermédiaires (F1, F2) dudit rayonnement, et en regroupant lesdits deux faisceaux intermédiaires dans un faisceau de rayonnement final (FS) ;
le procédé comprenant les étapes suivantes :

    - varier la différence de longueur de chemin optique pendant plusieurs cycles de détection successifs ;
    - à l'intérieur de chaque cycle de détection, détecter le rayonnement du faisceau final (FS) en accumulant une quantité-témoin en fonction d'une intensité du rayonnement dudit faisceau final ; et
    - obtenir un signal de lecture ($V_L$) à la fin de chaque cycle de détection ;

le procédé étant **caractérisé en ce que**, à l'intérieur de chaque cycle de détection, le faisceau de rayonnement final (FS) est détecté pendant au moins deux périodes de détection séparées ayant des durées respectives égales, et correspondant respectivement à des valeurs incrémentées de la différence de longueur de chemin optique, et **en ce que** le signal de lecture ($V_L$) est égal à une différence entre une première variation de la quantité-témoin se produisant pendant une première des périodes de détection, et une seconde variation de ladite quantité-témoin se produisant pendant une seconde desdites périodes de détection, et plusieurs cycles de détection sont réalisés successivement pour des valeurs incrémentées de la différence de longueur de chemin optique, de sorte qu'une transformation de Fourier effectuée sur les valeurs successives du signal de lecture ($V_L$) produit une caractéristique de la distribution énergétique spectrale du rayonnement du faisceau initial (F0), multipliée par un nombre d'onde du rayonnement.

5. Procédé selon la revendication 4, comprenant en outre les deux étapes supplémentaire suivantes :

- calculer des valeurs d'une fonction d'un nombre d'onde du rayonnement en effectuant une transformation de Fourier des signaux de lecture ($V_L$) par rapport à la différence de longueur de chemin optique ; et
- diviser les valeurs calculées de ladite fonction du nombre d'onde par des valeurs correspondantes dudit nombre d'onde pour obtenir une caractéristique d'une distribution énergétique spectrale du rayonnement du faisceau initia! (F0).

6. Procédé selon la revendication 4 ou 5, suivant lequel la quantité-témoin est une charge électrique (Q) contenue dans un condensateur (51), suivant lequel deux bornes électriques du condensateur (51a, 51b) reliées respectivement à deux armatures dudit condensateur sont échangées par rapport à deux sorties électriques (4a, 4b) d'un photodétecteur (4) utilisé pour détecter le rayonnement du faisceau final (FS) entre les deux périodes de détection, et suivant lequel le signal de lecture ($V_L$) est obtenu à partir d'une acquisition de la charge électrique (Q) contenue dans le condensateur réalisée après ladite seconde période de détection.

7. Procédé selon l'une quelconque des revendications 4 à 6, suivant lequel les première et seconde périodes de détection comprennent chacune plusieurs intervalles de temps élémentaires, les intervalles de temps élémentaires de la première période de détection étant intercalés un à un avec les intervalles de temps élémentaires de la seconde période de détection, et suivant lequel un changement de signe algébrique est commandé entre les variations de la quantité-témoin se produisant pendant deux intervalles de temps élémentaires successifs, ladite quantité-témoin n'étant pas elle-même modifiée entre lesdits deux intervalles de temps élémentaires successifs.

**Patentansprüche**

1. Fourier-Transformationsspektrometer, umfassend:

- eine Interferenzvorrichtung (10), die dazu ausgelegt ist, zwischen mindestens zwei Zwischenstrahlungsbündeln (F1, F2), die ausgehend von einem Anfangsbündel (F0) ausgebildet werden, eine variable Differenz der optischen Weglänge zu erzeugen und die zwei Zwischenbündel zu einem Endstrahlungsbündel (FS) zusammenzufassen;
- einen Photodetektor (4), der dazu angeordnet ist, das Endstrahlungsbündel (FS) zu empfangen, und dazu ausgelegt ist, durch Akkumulieren einer Bezugsmenge in Abhängigkeit von einer Intensität dieser empfangenen Strahlung die empfangene Strahlung zu erfassen; und
- eine Steuerelektronik (5), die dazu eingerichtet ist, innerhalb eines Erfassungszyklus eine Erfassung der durch den Photodetektor (4) empfangenen Strahlung zu steuern und am Ende dieses Erfassungszyklus ein Lesesignal ($V_L$) bereitzustellen;

wobei das Spektrometer **dadurch gekennzeichnet ist, dass** die Steuerelektronik (5) ferner dazu ausgelegt ist, innerhalb des Erfassungszyklus zwei getrennte Erfassungszeiträume zu bestimmen, die jeweils von gleicher Dauer sind, jeweiligen Mittelwerten der Differenz der optischen Weglänge entsprechen und während derer jeweils die durch den Photodetektor empfangene Strahlung erfasst wird, und dadurch, dass das Spektrometer ferner derart ausgelegt ist, dass das Lesesignal ($V_L$) gleich einer Differenz zwischen einer ersten Variation der Bezugsmenge, die während eines ersten der Erfassungszeiträume auftritt, und einer zweiten Variation der Bezugsmenge, die während eines zweiten der Erfassungszeiträume auftritt, ist, und dazu ausgelegt ist, nacheinander mehrere Erfassungszyklen für inkrementierte Werte der Differenz der optischen Weglänge durchzuführen, derart dass eine mit den aufeinanderfolgenden Werten des Lesesignals ($V_L$) vorgenommene Fourier-Transformation eine Kennlinie der spektralen Energieverteilung der Strahlung des Anfangsbündels (F0), multipliziert mit einer Wellenzahl der Strahlung, erzeugt.

2. Spektrometer nach Anspruch 1, ferner umfassend einen Kondensator (51), der zwei elektrische Anschlüsse (51a, 51b) aufweist, die jeweils zwei Elektroden des Kondensators zugeordnet sind, wobei die Bezugsmenge eine in dem Kondensator enthaltene elektrische Ladung (Q) ist,
wobei die Steuerelektronik (5) ferner dazu ausgelegt ist, zwischen den zwei Erfassungszeiträumen einen Austausch der Kondensatoranschlüsse (51a, 51b) bezogen auf zwei elektrische Ausgänge (4a, 4b) des Photodetektors (4) zu veranlassen, wobei die in dem Kondensator enthaltene elektrische Ladung (Q) selbst während des Austauschs nicht verändert wird, und
die Steuerelektronik ferner dazu ausgelegt ist, ausgehend von einer Erfassung der in dem Kondensator enthaltenen elektrischen Ladung (Q), die nach dem zweiten Erfassungszeitraum durchgeführt wird, das Lesesignal ($V_L$) bereitzustellen.

3. Fourier-Transformationsspektrometer nach Anspruch 1 oder 2, bei dem die Steuerelektronik (5) ferner dazu ausgelegt ist, den ersten und zweiten Erfassungszeitraum jeweils in Form mehrerer elementarer Zeitintervalle zu bestimmen, wobei die elementaren Zeitintervalle des ersten Erfassungszeitraums eins zu eins mit den elementaren Zeitintervallen des zweiten Erfassungszeitraums ineinandergeschoben sind, und
die Steuerelektronik ferner dazu ausgelegt ist, zwischen den Variationen der Bezugsmenge, die während zweier aufeinanderfolgender elementarer Zeitintervalle auftreten, eine Änderung des algebraischen Vorzeichens zu veranlassen, wobei die Bezugsmenge selbst zwischen den zwei aufeinanderfolgenden elementaren Zeitintervallen nicht verändert wird.

4. Spektralanalyseverfahren, das ein Fourier-Transformationsspektrometer (10) verwendet und bei dem ausgehend von einer Anfangsstrahlung (F0) durch Einführen einer Differenz der optischen Weglänge zwischen mindestens zwei Zwischenbündeln (F1, F2) dieser Strahlung und durch Zusammenfassen der zwei Zwischenbündel zu einem Endstrahlungsbündel (FS) ein Interferenzsignal erzeugt wird;
wobei das Verfahren die folgenden Schritte umfasst:

- Variieren der Differenz der optischen Weglänge während mehrerer aufeinanderfolgender Erfassungszyklen;
- Erfassen der Strahlung des Endbündels (FS) durch Akkumulieren einer Bezugsmenge in Abhängigkeit von einer Strahlungsintensität dieses Endbündels innerhalb jedes Erfassungszyklus; und
- Erhalten eines Lesesignals ($V_L$) am Ende jedes Erfassungszyklus;

wobei das Verfahren **dadurch gekennzeichnet ist, dass** innerhalb jedes Erfassungszyklus das Endstrahlungsbündel (FS) während mindestens zweier getrennter Erfassungszeiträume erfasst wird, die jeweils von gleicher Dauer sind und jeweils inkrementierten Werten der Differenz der optischen Weglänge entsprechen, und dadurch, dass das Lesesignal ($V_L$) gleich einer Differenz zwischen einer ersten Variation der Bezugsmenge, die während eines ersten der Erfassungszeiträume auftritt, und einer zweiten Variation der Bezugsmenge, die während eines zweiten der Erfassungszeiträume auftritt, ist
und nacheinander mehrere Erfassungszyklen für inkrementierte Werte der Differenz der optischen Weglänge durchgeführt werden, derart dass eine mit den aufeinanderfolgenden Werten des Lesesignals ($V_L$) vorgenommene Fourier-Transformation eine Kennlinie der spektralen Energieverteilung der Strahlung des Anfangsbündels (F0), multipliziert mit einer Wellenzahl der Strahlung, erzeugt.

5. Verfahren nach Anspruch 4, das ferner die zwei folgenden zusätzlichen Schritte umfasst:

- Berechnen von Werten einer Wellenzahlfunktion der Strahlung durch Vornehmen einer Fourier-Transformation der Lesesignale ($V_L$) bezogen auf die Differenz der optischen Weglänge; und
- Dividieren der berechneten Werte der Wellenzahlfunktion durch entsprechende Werte dieser Wellenanzahl, um eine Kennlinie einer spektralen Energieverteilung der Strahlung des Anfangsbündels (F0) zu erhalten.

6. Verfahren nach Anspruch 4 oder 5, dem zufolge die Bezugsmenge eine in einem Kondensator (51) enthaltene elektrische Ladung (Q) ist,
dem zufolge zwischen den zwei Erfassungszeiträumen zwei elektrische Kondensatoranschlüsse (51a, 51b), die jeweils zwei Elektroden dieses Kondensators zugeordnet sind, bezogen auf zwei elektrische Ausgänge (4a, 4b) eines Photodetektors (4), der zum Erfassen der Strahlung des Endbündels (FS) verwendet wird, ausgetauscht werden,
und dem zufolge das Lesesignal ($V_L$) ausgehend von einer Erfassung der in dem Kondensator enthaltenen elektrischen Ladung (Q) erhalten wird, die nach dem zweiten Erfassungszeitraum durchgeführt wird.

7.  Verfahren nach einem der Ansprüche 4 bis 6, dem zufolge der erste und zweite Erfassungszeitraum jeweils mehrere elementare Zeitintervalle umfassen, die elementaren Zeitintervalle des ersten Erfassungszeitraums eins zu eins mit den elementaren Zeitintervallen des zweiten Erfassungszeitraums ineinandergeschoben sind, und dem zufolge zwischen den Variationen der Bezugsmenge, die während zweier aufeinanderfolgender elementarer Zeitintervalle auftreten, eine Änderung des algebraischen Vorzeichens veranlasst wird, wobei die Bezugsmenge selbst zwischen den zwei aufeinanderfolgenden elementaren Zeitintervallen nicht verändert wird.

**Claims**

1.  Fourier transform spectrometer, comprising:

    - an interferential device (10) configured to produce a variable difference in optical path length between at least two intermediate radiation beams (F1, F2) formed from an initial beam (F0) and to regroup said two intermediate beams in a final radiation beam (FS);
    - a photodetector (4), disposed so as to receive the final radiation beam (FS) and configured to detect the received radiation by accumulating a measurement quantity as a function of an intensity of said received radiation; and
    - an electronic control unit (5), configured to command detection of the radiation received by the photodetector (4) within a detection cycle, and to output a read signal ($V_L$) at the end of said detection cycle;

    the spectrometer being **characterised in that** the electronic control unit (5) is also configured to determine, within the detection cycle, two separate detection periods having equal respective durations, corresponding to respective average values for the difference in optical path length, and during each of which the radiation received by the photodetector is detected,
    and **in that** said spectrometer is also configured so that the read signal ($V_L$) is equal to a difference between a first variation of the measurement quantity occurring during a first of the detection periods and a second variation in said measurement quantity occurring during a second of said detection periods,
    and configured to perform successively several detection cycles for incremented values of the difference in optical path length, so that a Fourier transformation performed on the successive values of the read signal ($V_L$) produces a characteristic of the spectral energy distribution of the radiation of the initial beam (F0), multiplied by a wave number of the radiation.

2.  Spectrometer as claimed in claim 1, further comprising a capacitor (51) having two electric terminals (51a, 51 b) connected respectively to two plates of said capacitor, the measurement quantity being an electric charge (Q) contained in the capacitor,
    the electronic control unit (5) being further configured to command a swap of the capacitor terminals (51a, 51 b) relative to two electric outputs (4a, 4b) of the photodetector (4) between the two detection periods, the electric charge (Q) contained in the capacitor itself not being modified during the swap, and
    the electronic control unit (5) being further configured to supply the read signal ($V_L$) on the basis of a capture of the electric charge (Q) contained in the capacitor, performed after said second detection period.

3.  Fourier transform spectrometer as claimed in claim 1 or 2, wherein the electronic control unit (5) is further configured to determine the first and second detection periods, each in the form of several elementary time intervals, the elementary time intervals of the first detection period being slotted one-by-one in between the elementary time intervals of the second detection period, and
    the electronic control unit being further configured to control a change of algebraic sign between the variations of the measurement quantity occurring during two successive elementary time intervals, said measurement quantity itself not being modified between said two successive elementary time intervals.

4.  Method of spectral analysis using a Fourier transform spectrometer (10), during which an interference signal is generated from an initial radiation (F0) by introducing a difference in optical path length between at least two intermediate beams (F1, F2) of said radiation, and regrouping said intermediate beams in a final radiation beam (FS), the method comprising the following steps:

- varying the difference in optical path length during several successive detection cycles;
- within each detection cycle, detecting the radiation of the final beam (FS) by accumulating a measurement quantity as a function of an intensity of the radiation of said final beam; and
- obtaining a read signal ($V_L$) at the end of each detection cycle;

the method being **characterised in that** within each detection cycle, the final radiation beam (FS) is detected during at least two separate detection periods having respective equal durations and corresponding respectively to incremented values of the difference in optical path length,

and **in that** the read signal ($V_L$) is equal to a difference between a first variation of the measurement quantity occurring during a first of the detection periods and a second variation of said measurement quantity occurring during a second of said detection periods,

and several detection cycles are performed successively for incremented values of the difference in optical path length, so that a Fourier transformation performed on the successive values of the read signal ($V_L$) produces a characteristic of the spectral energy distribution of the radiation of the initial beam (F0), multiplied by a wave number of the radiation.

5. Method as claimed in claim 4, further comprising the following two additional steps:

   - calculating values of a function of a wave number of the radiation by performing a Fourier transformation of the read signals ($V_L$) relative to the difference in optical path length; and
   - dividing the calculated values of said function of the wave number of the radiation by corresponding values of said wave number to obtain a characteristic of a spectral energy distribution of the radiation of the initial beam (F0).

6. Method as claimed in claim 4 or 5, whereby the measurement quantity is an electric charge (Q) contained in a capacitor (51),
   whereby two electric terminals (51a, 51 b) of the capacitor connected respectively to two plates of said capacitor are swapped relative to two electric outputs (4a, 4b) of a photodetector (4) used to detect the radiation of the final beam (FS) between the two detection periods,
   and whereby the read signal ($V_L$) is obtained on the basis of a capture of the electric charge (Q) contained in the capacitor, performed after said second detection period.

7. Method as claimed in any one of claims 4 to 6, whereby the first and second detection periods each comprise several elementary time intervals, the elementary time intervals of the first detection period being slotted one-by-one in between the elementary time intervals of the second detection period,
   and whereby a change in algebraic sign is controlled between the variations of the measurement quantity occurring during two successive elementary time intervals, said measurement quantity itself not being modified between said successive elementary time intervals.

FIG. 1

FIG. 2a

FIG. 2b

**EP 2 103 916 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5357337 A